# EUROPÄISCHE PATENTANMELDUNG

(11) **EP 2 147 837 A1**
(43) Veröffentlichungstag der Anmeldung: **27.01.2010**
(21) Anmeldenummer: 09100357.4
(22) Anmeldetag: 16.07.2009
(51) Int. Cl.: B60S 1/16, B60S 1/24

(54) **Scheibenwischerantrieb**

(30) Priorität: 24.07.2008 DE 102008040705
(71) Anmelder: ROBERT BOSCH GMBH, 70442 Stuttgart (DE)
(72) Erfinder: Trenkle, Lothar, 77833, Ottersweier (DE); Kraus, Achim, 77815, Buehl (DE)

(57) **Zusammenfassung**

Die Erfindung betrifft einen Scheibenwischerantrieb (1), insbesondere Frontscheibenwischerantrieb für ein Kraftfahrzeug, umfassend eine rotierbar angeordnete Abtriebswelle (9) sowie eine an der Abtriebswelle (9) mittels einer Schraube (15) drehfest fixierbare Kurbel (12) zum Antreiben eines Gestänges, wobei die Schraube (15) eine Öffnung (14) in der Kurbel (12) durchsetzend angeordnet ist. Erfindungsgemäß ist vorgesehen, dass die Schraube (15) einen zum konzentrischen Ausrichten der Öffnung (14) relativ zur Schraubenlängsmittelachse beim Fixieren der Kurbel (12) ausgebildeten Ausrichtabschnitt (23) aufweist.

## Beschreibung

### Stand der Technik

Die Erfindung betrifft einen Scheibenwischerantrieb, insbesondere einen Frontscheibenwischerantrieb gemäß dem Oberbegriff des Anspruchs 1 sowie eine Vorrichtung gemäß Anspruch 10.

Heutige Frontscheibenwischerantriebe umfassen einen Elektromotor, der über ein Schneckengetriebe eine Abtriebswelle antreibt. Endseitig an der Abtriebswelle ist eine Kurbel (sogenannte Motorkurbel) drehfest fixiert, über die ein Gestänge angetrieben wird. Die Gestängebewegung führt wiederum zu einer pendelnden Bewegung zweier in Querrichtung des Kraftfahrzeugs beabstandeter Wischerwellen, die jeweils einen Wischerarm tragen.

Zur Fixierung der Kurbel an der Abtriebswelle ist es bekannt, eine Rändelkegelverbindung nach DIN 72783 einzusetzen. Dabei wird die Kurbel mittels einer Mutter gegen eine gerändelte Kegelabtriebswelle gepresst. Eine alternative, bekannte Befestigungsmöglichkeit sieht vor, die Kurbel mittels einer Schraube an der Abtriebswelle zu fixieren, wobei hierzu die Abtriebswelle als die Schraube abschnittsweise aufnehmende Hohlwelle ausgebildet ist. Nachteilig bei dem Einsatz einer Schraube ist es, dass die Kurbel vor dem Festziehen der Schraube exakt positioniert werden muss. Dies ist insbesondere bei einer automatischen Montage mit einem erheblichen Aufwand verbunden.

### Offenbarung der Erfindung

### Technische Aufgabe

Der Erfindung liegt die Aufgabe zugrunde, einen verbesserten Scheibenwischerantrieb vorzuschlagen, bei dem trotz des Einsatzes einer Schraube zum Fixieren der Kurbel an der Abtriebswelle keine exakte (Vor-) Positionierung der Kurbel notwendig ist.

### Technische Lösung

Diese Aufgabe wird mit einem Scheibenwischerantrieb mit den Merkmalen des Anspruchs 1 sowie durch eine Verwendung mit den Merkmalen des Anspruchs 10 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, die Schraube mit einem Ausrichtabschnitt zu versehen, der derart ausgebildet ist, dass die Kurbel, genauer eine von der Schraube durchsetzte Öffnung der Kurbel, automatisch beim Fixieren der Kurbel an der Abtriebswelle mittels der Schraube relativ zur Schraubenlängsmittelachse ausgerichtet wird. Anders ausgedrückt kann durch das Vorsehen einer einen Ausrichtabschnitt aufweisenden Schraube zum drehfesten Fixieren der Kurbel an der, insbesondere von einem Schneckengetriebe unmittelbar angetriebenen, Abtriebswelle ein separater Ausrichtvorgang zum exakten Ausrichten der von der Schraube durchsetzten Kurbelöffnung relativ zur Schraubenlängsmittelachse bzw. relativ zu einem Gewinde zum Fixieren der Schraube unterbleiben. Hierdurch eignet sich ein nach dem Konzept der Erfindung ausgebildeter Wischerantrieb mit einer einen wie zuvor beschriebenen ausgebildeten Ausrichtabschnitt aufweisenden Schraube zum konzentrischen Ausrichten der von der Schraube durchsetzten Kurbelöffnung relativ zur Schraubenlängsmittelachse optimal für eine automatisierte Montage. Dabei wird die Kurbel beim Eindrehen der Schraube mit Hilfe des Ausrichtabschnitts automatisch quer zur Längsmittelachse der Schraube verschoben, bis die Kurbel exakt zur Schraubenlängsmittelachse und damit zur Abtriebswelle positioniert ist.

In Weiterbildung der Erfindung ist mit Vorteil vorgesehen, dass der Ausrichtabschnitt eine, insbesondere konische, Fase aufweist bzw. als solche ausgebildet ist. Bevorzugt handelt es sich bei der Fase um die Mantelfläche eines kegelstumpfförmigen Abschnittes der Schraube, also eines Axialabschnittes der Schraube, dessen Durchmesser in Richtung der Längserstreckung der Schraube abnimmt.

In Weiterbildung der Erfindung ist mit Vorteil vorgesehen, dass die Fase des Ausrichtabschnittes als Unterkopffase ausgebildet ist, also unmittelbar an einen Schraubenkopf in axialer Richtung anschließt. Bevorzugt weist der Schraubenkopf auf seiner vom Schaft abgewandten Stirnseite eine Werkzeugaufnahme zur Aufnahme eines Fixierwerkzeugs (Drehwerkzeugs) auf.

Besonders bevorzugt ist eine Ausführungsform der Schraube, bei der der Schraubenkopf die Unterkopffase in radialer Richtung überragt. Mit dem ringförmigen, die Unterkopffase überragenden Unterkopfabschnitt liegt die Schraube bevorzugt auf einer vom Getriebe abgewandten Flachseite der Kurbel auf und klemmt diese somit in Richtung der Abtriebswelle.

Ganz besonders bevorzugt ist eine Ausführungsform, bei der der maximale (oberste) Durchmesser der Fase, zumindest näherungsweise, dem Durchmesser der Öffnung in der Kurbel entspricht. Hierdurch wird erreicht, dass die Öffnung exakt zur Längsmittelachse der Schraube ausgerichtet wird, da die Fase die Öffnung im fixierten Zustand der Kurbel vollständig ausfüllt.

In Weiterbildung der Erfindung ist mit Vorteil vorgesehen, dass die Schraube als Schaftschraube ausgebildet ist, bei der axial zwischen der Fase und einem Außengewinde der Schraube ein gewindefreier Schaftabschnitt vorgesehen ist. Diese Ausführungsform ist insbesondere dann von Vorteil, wenn die Abtriebswelle als Hohlwelle ausgebildet ist, in die unmittelbar das Innengewinde zum Festlegen der Schraube integriert ist. Die Ausbildung der Schraube als Schaftschraube ermöglicht es dabei, dass das Innengewinde nicht axial bis zur Stirnseite der Abtriebswelle geführt sein muss, sondern erst mit Axialabstand zu dem Ende der Abtriebswelle beginnt.

Ganz besonders bevorzugt ist eine Ausführungsform, bei der die Kurbel sich in axialer Richtung an der Abtriebswelle abstützt. Hierzu ist die Abtriebswelle bevorzugt mit einer Umfangsschulter versehen, auf der die Kurbel aufliegt und von der Schraube, genauer einem Schraubenkopf der Schraube, in axialer Richtung gegen diese Umfangsschulter gepresst wird.

Bei einer Ausbildung der Abtriebswelle, zumindest abschnittsweise, vorzugsweise axial durchgehend als Hohlwelle ist es jedoch nicht zwingend notwendig, das Innengewinde unmittelbar in die Abtriebswelle einzubringen. Es ist auch eine Ausführungsform denkbar, bei der das Innengewinde an einem separaten, an der Abtriebswelle festgelegten Gewindebauteil vorgesehen ist.

Um eine besonders robuste Verbindung zwischen Kurbel und Abtriebswelle zu gewährleisten, ist eine Ausführungsform bevorzugt, bei der die Kurbel über einen gerändelten Zylinderabschnitt geführt ist. Anders ausgedrückt liegt die Kurbel mit dem Innenumfang ihrer von der Schraube durchsetzten Öffnung bevorzugt an einem gerändelten Zylinderabschnitt der Abtriebswelle an.

Die Erfindung führt auch auf eine Verwendung einer einen Ausrichtabschnitt, insbesondere eine Fase, aufweisenden Schraube zum drehfesten Fixieren einer Kurbel an einer Abtriebswelle eines Scheibenwischerantriebs. Besonders bevorzugt handelt es sich bei dem Scheibenwischerantrieb dabei um einen Frontscheibenwischerantrieb, bei der eine rotierende Bewegung der Abtriebswelle in eine pendelnde Bewegung zweier jeweils einen Wischerarm tragenden Wischerwellen umgewandelt wird.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine schematische, teilgeschnittene Ansicht eines Scheibenwischerantriebs für eine Frontscheibenwischanlage, umfassend eine Abtriebswelle, an der eine Kurbel mittels einer einen Ausrichtabschnitt aufweisenden Schraube festgelegt ist,
- Fig. 2:: eine vergrößerte Darstellung der Schraube aus Fig. 1 und
- Fig. 3a - Fig. 3c:: drei zeitlich aufeinander folgende Montagezustände bei der Montage einer Kurbel auf einer Abtriebswelle eines Scheibenwischerantriebs.

### Ausführungsformen der Erfindung

In den Figuren sind gleiche Bauteile und Bauteile mit der gleichen Funktion mit den gleichen Bezugszeichen gekennzeichnet.

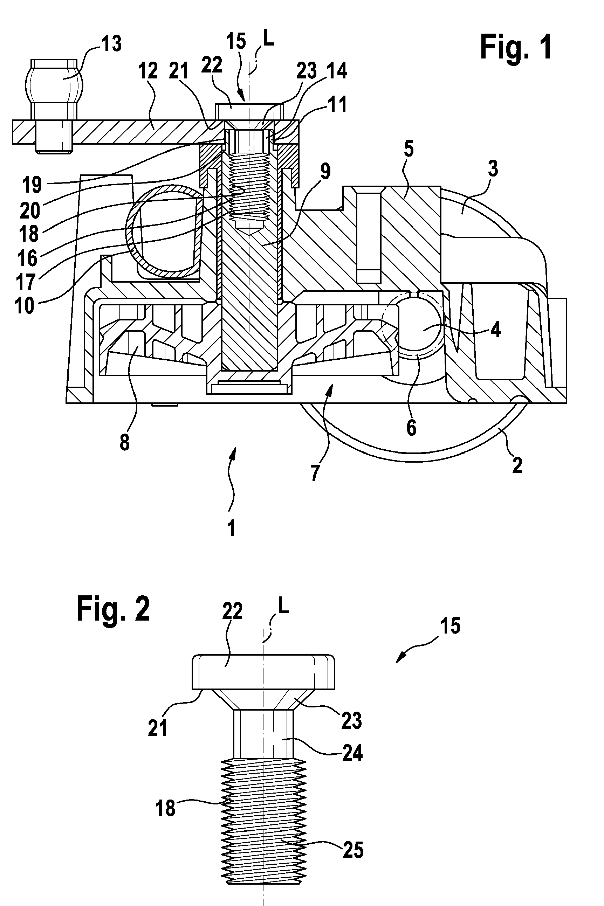

In Fig. 1 ist ein Scheibenwischerantrieb 1 für eine Frontscheibenwischanlage (nicht weiter dargestellt) gezeigt. Der Scheibenwischerantrieb 1 umfasst einen in einem Polgehäuse 2 angeordneten Elektromotor 3, der eine Motorwelle 4 rotierend antreibt. Die Motorwelle 4 ist in ein Getriebegehäuse 5 des Scheibenwischerantriebs geführt, an dem das Polgehäuse 2 des Elektromotors 3 angeflanscht ist. Auf der Motorwelle 4 sitzt eine Getriebeschnecke 6 eines Schneckengetriebes 7, die mit einem Abtriebsrad 8 kämmt. Zentrisch im Abtriebsrad 8 ist eine Abtriebswelle 9 drehfest fixiert, sodass die Abtriebswelle 9 von dem Elektromotor 3 in eine rotierende Bewegung versetzbar ist.

Am Getriebegehäuse 5 ist ein Tragrohr 10 festgelegt, das im Bereich seiner nicht dargestellten Enden jeweils ein Wischerwellenlager für eine Wischerwelle trägt.

Die Abtriebswelle 9 durchsetzt das Getriebegehäuse 5 und trägt an ihrem in der Zeichnungsebene oberen Ende 11 eine Kurbel 12 (Motorkurbel). Diese ist als flache Kurbelplatte ausgebildet und trägt im Bereich ihres freien Endes einen Gelenkzapfen 13 zum Festlegen eines nicht gezeigten Gestänges zum Antreiben der Wischerwellen.

Die Kurbel 12 weist eine Öffnung 14 auf, die von einer Schraube 15 durchsetzt ist. Die Schraube 15 fixiert die Kurbel 12 drehfest an der Abtriebswelle 9.

Im Bereich ihres Endes 11 ist die Abtriebswelle 9 als Hohlwelle ausgebildet und weist in einer als Sackloch ausgebildeten Aufnahmeöffnung 16 ein Innengewinde 17 auf, mit dem ein Außengewinde 18 der Schraube 15 fixiert ist. Mit ihrer Öffnung 14 ist die Kurbel 12 über einen endseitigen, gerändelten Zylinderabschnitt 19 der Abtriebswelle geführt, wobei die Kurbel 12 mit ihrer in der Zeichnungsebene unteren Seite auf einer äußeren, ringförmigen Umfangsschulter 20 der Abtriebswelle 9 aufliegt. Gegen diese Umfangsschulter 20 wird die Kurbel 12 in axialer Richtung von der Schraube 15, genauer einem ringförmigen Unterkopfabschnitt 21 des Schraubenkopfes 22 der Schraube 15 gepresst.

Wie sich aus Fig. 1 ergibt, weist die Schraube 15 einen als Fase, genauer als Unterkopffase, ausgebildeten Ausrichtabschnitt 23 auf, dessen Durchmesser im Übergangsbereich zum Schraubenkopf 22 dem Durchmesser der Öffnung 14 in der Kurbel 12 entspricht. Mit Hilfe des Ausrichtabschnittes 23 wird die Kurbel 12 solange mit einer quer zur Längsmittelachse L der Schraube 15 gerichteten Ausrichtkraft beaufschlagt, bis die Öffnung 14 konzentrisch zur Längsmittelachse L der Schraube 15 ausgerichtet ist. Dabei liegt die Längsmittelachse L der Schraube 15 exakt auf der Längsmittelachse der Abtriebswelle 9. Anders ausgedrückt wird die Kurbel 12 beim Eindrehen der Schraube 15 in die in Fig. 1 gezeigte Position automatisch relativ zur Längsmittelachse der Abtriebswelle 9 ausgerichtet, derart, dass der Innenumfang der Öffnung 14 bei fertig montierter Kurbel 12 konzentrisch zur Längsmittelachse der Abtriebswelle 9 und damit zu der Längsmittelachse L der Schraube 15 verläuft.

In Fig. 2 ist die bei dem Ausführungsbeispiel gemäß Fig. 1 zum Einsatz kommende, als Schaftschraube ausgebildete Schraube 15 im Detail gezeigt. Diese umfasst einen zylindrischen Schraubenkopf 22 mit einem ringförmigen Unterkopfabschnitt 21, der die Kurbel 12 in Richtung der Umfangsschulter 20 der Abtriebswelle 9 (vergleiche Fig. 1) presst. Radial innen wird der ringförmige Unterkopfabschnitt 21 begrenzt von einem als Fase, genauer als Unterkopffase, ausgebildeten Ausrichtabschnitt 23. Der Durchmesser des konischen Ausrichtabschnittes 23 nimmt in axialer Richtung betrachtet ab. Axial an den Ausrichtabschnitt 23 schließt ein gewindefreier Schaftabschnitt 24 an, an den in axialer Richtung ein Außengewindeabschnitt 25 mit Außengewinde 18 anschließt. Mit Hilfe des Außengewindes 18 kann die Schraube 15 mit einem in der abschnittsweise als Hohlwelle ausgebildeten Abtriebswelle 9 vorgesehenen Innengewinde 17 (vergleiche Fig. 1) verschraubt werden.

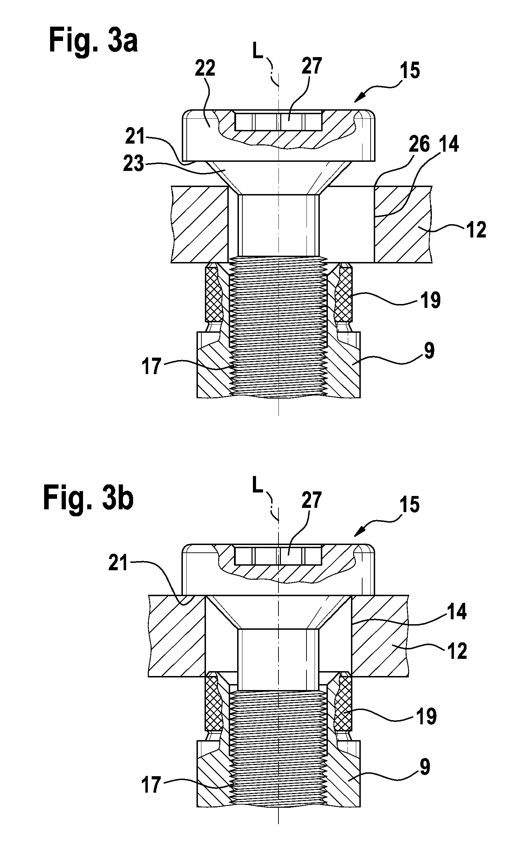

In den Fig. 3a bis Fig. 3c sind unterschiedliche, zeitlich aufeinanderfolgende Zustände bei der Montage einer nur ausschnittsweise dargestellten Kurbel 12 an einer nur ausschnittsweise dargestellten, als Hohlwelle ausgebildeten Abtriebswelle 9 eines sonst nicht weiter dargestellten Scheibenwischerantriebs gezeigt.

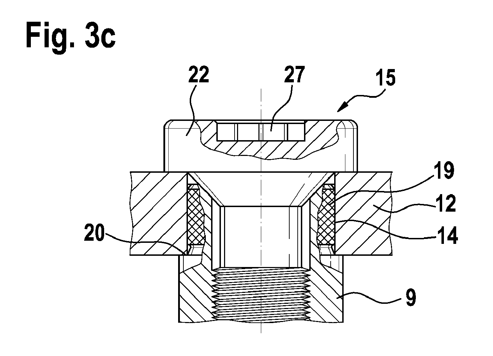

Zu erkennen ist, dass die in ihrem freien Endbereich als Hohlwelle ausgebildete Abtriebswelle 9 einen gerändelten Zylinderabschnitt 19 aufweist, dessen Durchmesser minimal größer ist als der Durchmesser einer Öffnung 14 in der Kurbel 12, die von der Schraube 15 durchsetzt wird. Wie sich aus Fig. 3a ergibt, ist die Öffnung 14 in einem Urzustand bei Beginn der Montage nicht exakt zur Längsmittelachse L der Schraube 15 und damit nicht exakt zur Längsmittelachse der Abtriebswelle 9 ausgerichtet. Beim Eindrehen der Schraube 15 in ein Innengewinde 17 der Abtriebswelle 9 kommt die Schraube 15 mit ihrem als Fase (Unterkopffase) ausgebildeten Ausrichtabschnitt 23 zur Anlage an einer oberen Ringkante 26 der Öffnung 14 in der Kurbel 12. Wird die Schraube 15 weiter eingedreht, also in axialer Richtung hin zur Abtriebswelle 9 bewegt, resultiert aus dem konischen Ausrichtabschnitt 23 eine quer zur Längsmittelachse L auf die Kurbel wirkende Ausrichtkraft, die dazu führt, dass bei dem gezeigten Ausführungsbeispiel die Kurbel 12 in der Zeichnungsebene nach links relativ zur Längsmittelachse L verstellt wird, bis der in Fig. 3b gezeigte Zustand erreicht ist, in dem die Öffnung 14 exakt konzentrisch zur Längsmittelachse L der Schraube 15 ausgerichtet ist. Zu erkennen ist, dass mittlerweile die Schraube 15 mit ihrem Unterkopfabschnitt 21 (Ringfläche) auf einer von der Abtriebswelle 9 abgewandten Flachseite der Kurbel 12 aufliegt. Wird die Schraube 15 nun ausgehend von Fig. 3b noch weiter in die Abtriebswelle 9 eingedreht, wird die Kurbel 12 mit ihrer Öffnung 14 über den gerändelten Zylinderabschnitt 19 der Abtriebswelle 9 geschoben, bis dass die Kurbel 12 auf der Umfangsschulter 20 axial unterhalb des Zylinderabschnitts 19 zum Liegen kommt (vgl. Fig. 3c). Die Schraube 15 verspannt nun die Kurbel 12 drehfest gegen die Umfangsschulter 20 der Abtriebswelle 9, sodass die Kurbel 12 bei rotierender Abtriebswelle 9 mit rotiert wird.

Wie sich aus den Fig. 3a bis 3c ergibt, ist stirnseitig in den Schraubenkopf 22 eine Werkzeugaufnahme 27 eingebracht, die zur Aufnahme eines Montagewerkzeugs zum Verdrehen der Schraube 15 dient.

## Patentansprüche

1. Scheibenwischerantrieb, insbesondere Frontscheibenwischerantrieb für ein Kraftfahrzeug, umfassend eine rotierbar angeordnete Abtriebswelle (9) sowie eine an der Abtriebswelle (9) mittels einer Schraube (15) drehfest fixierbare Kurbel (12) zum Antreiben eines Gestänges, wobei die Schraube (15) eine Öffnung (14) in der Kurbel (12) durchsetzend angeordnet ist,
**dadurch gekennzeichnet,**
**dass** die Schraube (15) einen zum konzentrischen Ausrichten der Öffnung (14) relativ zur Schraubenlängsmittelachse beim Fixieren der Kurbel (12) ausgebildeten Ausrichtabschnitt (23) aufweist.

2. Scheibenwischerantrieb nach Anspruch 1,
**dadurch gekennzeichnet,**
**dass** der Ausrichtabschnitt (23) eine, insbesondere konische, Fase aufweist.

3. Scheibenwischerantrieb nach Anspruch 2,
**dadurch gekennzeichnet,**
**dass** die Fase als Unterkopffase aufgebildet ist, die axial zwischen dem Schraubenkopf (22) und einem Außengewinde (18) der Schraube (15) angeordnet ist.

4. Scheibenwischerantrieb nach Anspruch 3,
**dadurch gekennzeichnet,**
**dass** der Schraubenkopf (22) die Unterkopffase in radialer Richtung überragt.

5. Scheibenwischerantrieb nach einem der Ansprüche,
**dadurch gekennzeichnet,**
**dass** der maximale Durchmesser der Fase, zumindest näherungsweise, dem Durchmesser der Öffnung (14) entspricht.

6. Scheibenwischerantrieb nach einem der Ansprüche 2 bis 5,
**dadurch gekennzeichnet,**
**dass** die Schraube (15) als Schaftschraube mit einem zwischen Fase und Außengewinde (18) angeordnetem gewindefreien Schaftabschnitt (24) aufweist.

7. Scheibenwischerantrieb nach einem der vorhergehenden Ansprüche,
**dadurch gekennzeichnet,**
**dass** die Kurbel (12) mittels der Schraube (15) gegen eine Umfangsschulter (20) der Abtriebswelle (9) gepresst ist.

8. Scheibenwischerantrieb nach einem der vorhergehenden Ansprüche,
**dadurch gekennzeichnet,**
**dass** die Abtriebswelle (9), zumindest in einem der Kurbel (15) zugewandten Axialabschnitt als Hohlwelle, vorzugsweise mit integralem Innengewinde (17) für die Schraube (15) ausgebildet ist.

9. Scheibenwischerantrieb nach einem der vorhergehenden Ansprüche,
**dadurch gekennzeichnet,**
**dass** die Kurbel (12) mit ihrer Öffnung (14) über einen gerändelten Zylinderabschnitt (19) der Abtriebswelle (9) geführt ist.

10. Verwendung einer einen Ausrichtabschnitt (23) aufweisenden Schraube (15) zum drehfesten Fixieren einer Kurbel (12) an einer Abtriebswelle (9) eines Scheibenwischerantriebs (1).
